(19) **Europäisches Patentamt / European Patent Office / Office européen des brevets**

(11) **EP 2 367 291 B1**

(12) **FASCICULE DE BREVET EUROPEEN**

(45) Date de publication et mention
de la délivrance du brevet:
**25.05.2016 Bulletin 2016/21**

(51) Int Cl.:
***H04B 1/10*** *(2006.01)*

(21) Numéro de dépôt: **11157078.4**

(22) Date de dépôt: **04.03.2011**

(54) **Circuit radiofréquence embarqué dans un satellite comprenant un système de contrôle thermique par signal d'alarme généré par la réflexion de puissance**

Im Satellit eingebaute Mikrowellen-Schaltung mit einem auf einem aus reflektierter Leistung erzeugten Signal basierenden thermischen Regelsystem

Satellite borne radio frequency circuit including a thermal control system based on a alarm signal generated by reflected power

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.03.2010 FR 1000910**

(43) Date de publication de la demande:
**21.09.2011 Bulletin 2011/38**

(73) Titulaire: **Thales**
**92200 Neuilly Sur Seine (FR)**

(72) Inventeurs:
• **Tonello, Emilie**
**31470 SAINT-LYS (FR)**
• **Pacaud, Damien**
**31870 BEAUMONT SUR LEZE (FR)**
• **Lacombe, Jean-Claude**
**31170 TOURNEFEUILLE (FR)**

(74) Mandataire: **Brunelli, Gérald et al**
**Marks & Clerk France**
**Immeuble Visium**
**22, avenue Aristide Briand**
**94117 Arcueil Cedex (FR)**

(56) Documents cités:
**EP-A2- 1 732 231       US-A- 2 648 047**
**US-A1- 2003 114 182       US-B1- 6 753 807**

EP 2 367 291 B1

## Description

L'invention concerne un circuit radiofréquences embarqué dans un satellite comprenant un système de contrôle thermique par signal d'alarme et isolateur générant un tel signal. Elle s'applique notamment aux domaines des satellites artificiels, en particulier des satellites de télécommunications.

Les satellites artificiels sont utilisés fréquemment pour mettre en oeuvre des systèmes de télécommunications. Ils permettent notamment de couvrir des zones géographiques pour lesquelles des réseaux terrestres n'ont pas été déployés, ou bien d'interconnecter des réseaux terrestres lointains. Un satellite artificiel comprend un charge utile, c'est-à-dire un ensemble d'équipements lui permettant d'effectuer les opérations pour lesquelles il a été conçu. Pour des raisons techniques, mais aussi de coût, le poids de cette charge utile doit être minimisé. Ainsi, des traitements qu'il serait fonctionnellement approprié de faire au niveau d'un satellite sont parfois mis en oeuvre au niveau des stations terrestres du système en raisons de ces contraintes.

Lors du déploiement du système, les satellites sont placés à une orbite préalablement choisie, le choix de cet orbite étant réalisé lors de la conception du système. Une fois en orbite, il est difficile d'intervenir physiquement sur un satellite, notamment en cas de panne. Cela doit bien sûr être pris en compte par les concepteurs, et certains circuits présentent une certaine redondance afin de pouvoir remplacer des ressources défectueuses.

La publication de demande de brevet EP 1 732 231 A2 a pour objet un système pour contrôler la puissance de sortie d'un l'amplificateur de puissance.

La publication de brevet US 6 753 807 B1 divulgue un diviseur-combineur de puissance.

La publication de demande de brevet US 2003/114182 A1 divulgue un amplificateur de puissance adaptatif.

La publication de brevet US 2 648 047 A divulgue un guide d'onde.

Un satellite de télécommunication émet et reçoit habituellement sur plusieurs canaux distincts, un canal correspondant à une bande de fréquences. La charge utile des satellites peut donc être canalisée, c'est-à-dire qu'un ensemble d'équipements, comme par exemples des amplificateurs, sont dédiés à la transmission ou à la réception de signaux sur un canal donné. En émission, les signaux émis pour chaque canal sont mis en forme par des chaînes de gains associées à chaque canal et sont multiplexés en utilisant un multiplexeur de sortie, désigné dans la suite de la description par l'acronyme OMUX en référence à l'expression anglo-saxonne « Output Multiplexer ». Un multiplexeur OMUX correspond à un assemblage de filtres radiofréquences. Le signal résultant du multiplexage est ensuite dirigé vers une antenne d'émission large bande. Les filtres de l'OMUX sont, par exemple, des filtres passe-bande alloués aux différents canaux de transmission et permettant d'éviter que le signal émis sur un canal n'interfère avec les signaux des canaux adjacents. Une portion du signal généré par les équipements associés à un canal peut être réfléchi par exemple au niveau du multiplexeur OMUX, cette portion correspondant aux fréquences du signal n'appartenant pas à la bande passante du filtre. Ces réflexions peuvent être la conséquence d'une erreur humaine résultant par exemple d'une programmation erronée de fréquence par un opérateur d'une station de contrôle au sol. Ces réflexions peuvent aussi être la conséquence de disfonctionnements ou d'une mauvaise programmation des équipements de la charge utile réalisant l'aiguillage des signaux de forte puissance en sortie de la chaîne de gain des canaux vers les filtres de l'OMUX, ces équipements étant appelés commutateurs dans la suite de la description. Des pannes peuvent aussi entrainer des réflexions, notamment si l'oscillateur embarqué utilisé pour la transposition en fréquence du signal à émettre est défectueux. D'autre part, si le satellite est utilisé comme répéteur, une panne au sol impliquant un décalage de la fréquence du signal reçu par le satellite entrainera un décalage au niveau du canal d'émission et donc des réflexions au niveau des filtres de l'OMUX. De plus, une mauvaise adaptation de la sortie du répéteur peut aussi induire des réflexions de signal.

La puissance radiofréquence résultant de ces réflexions doit être dissipée afin de garantir un bon fonctionnement en émission. Pour cela des solutions existantes positionnent dans les chaînes de gains radiofréquence des isolateurs haute puissance, habituellement désignés par l'acronyme HPI venant de l'expression anglo-saxonne « High Power Isolator », composé d'un circulateur et d'une charge de puissance.

Les réflexions mentionnées induisent une dissipation de puissance sous forme thermique, et la température des circuits tels que les OMUX et les charges de puissance peut augmenter significativement jusqu'à ce que ceux-ci soient endommagés de manière irrémédiable.

Afin d'éviter cela, des solutions existantes de détection thermique proposent de mesurer la température au niveau des filtres du multiplexeur OMUX à l'aide de thermistors, lesdits thermistors générant des signaux de mesure traités par un calculateur de bord embarqué par le satellite. Ces solutions ont pour inconvénient principal leur temps de réaction qui est de l'ordre de plusieurs dizaines de secondes avant que les composants soient ajustés pour que la température baisse.

Un but de l'invention est notamment de pallier les inconvénients précités.

A cet effet l'invention a pour objet un circuit radiofréquence embarqué dans un satellite, des données étant transmises sur plusieurs canaux par des signaux radiofréquences, un canal correspondant à une bande de fréquence, une chaîne de gains pouvant être associée à un canal de manière à générer le signal radiofréquence à transmettre sur celui-ci, ladite chaîne comportant au moins un amplificateur à gain variable, les signaux radiofréquences ainsi générés étant multiplexés par un multiplexeur composé de filtres passe-bande. Les chaînes de gains comportent une charge de puissance agencée de manière à dissiper la puissance de signaux réfléchie par les filtres du multiplexeur, ladite charge comportant des moyens pour générer un signal d'alarme A(t) représentatif du niveau de puissance des signaux réfléchis, ce signal d'alarme étant utilisé pour contrôler le gain de l'amplificateur à gain variable.

Selon un aspect de l'invention, des modules de contrôle associés aux chaînes de gains comprennent des moyens pour déterminer des consignes de contrôle de l'amplificateur à gain variable desdites chaînes, lesdites consignes étant déduites de la comparaison entre une quantité représentative du signal d'alarme A(t) et une valeur seuil S prédéfinie.

Selon un autre aspect de l'invention, la quantité représentative du signal d'alarme est son intensité ou sa tension.

La consigne générée par un module de contrôle est, par exemple, telle que l'amplificateur à gain variable d'au moins une chaîne de gains est désactivé lorsque la valeur représentative du signal d'alarme est supérieure ou égale à la valeur seuil S.

L'invention a aussi pour objet une charge de puissance composée d'une pièce de guide d'onde creuse conçue comme un court circuit, comprenant une ouverture par laquelle un signal d'entrée à atténuer est introduit, ledit signal étant atténué par un matériau absorbant compris dans la pièce de guide d'onde. La charge de puissance comprend un détecteur radiofréquence, ledit détecteur étant positionné à l'extrémité opposée à l'ouverture de la pièce de guide d'onde, ladite pièce étant telle qu'elle laisse passer un portion de puissance du signal d'entrée au niveau de son extrémité la plus proche du détecteur, le détecteur radiofréquence convertissant cette portion de puissance en un signal d'alarme A(t).

Le détecteur radiofréquence est, par exemple, un détecteur à diodes ou à transistors.

Dans un mode de réalisation, la portion de puissance du signal entrant est transmise vers le détecteur radiofréquence par couplage.

Le signal d'alarme correspond, par exemple, à une tension ou une intensité fonction de la puissance incidente de la portion de puissance présente en entrée du détecteur.

L'invention a notamment comme avantage de pouvoir être mise en oeuvre entièrement dans la partie radiofréquences des circuits embarqués, ce qui facilite la conception des circuits. En outre, l'ingénieur radiofréquence n'aura pas à interagir avec d'autres corps de métiers lors de la conception de circuits mettant en oeuvre l'invention, comme par exemple des ingénieurs thermiciens.

Un autre avantage est que le poids de la charge utile du satellite peut être réduite de plusieurs kilos lorsque la solution proposée est mise en oeuvre.

D'autres caractéristiques et avantages de l'invention apparaîtront à l'aide de la description qui suit donnée à titre illustratif et non limitatif, faite en regard des dessins annexés parmi lesquels :

- la figure 1 donne un exemple de circuit radiofréquence embarqué comprenant un système de détection thermique ;
- la figure 2 donne un exemple de charge de puissance ;
- la figure 3 présente une charge de puissance améliorée comprenant un détecteur radiofréquence ;
- la figure 4 donne un exemple de circuit radiofréquences embarqué comprenant un système de gain par signal d'alarme ;
- la figure 5 donne un exemple de module de contrôle d'un amplificateur de canal.

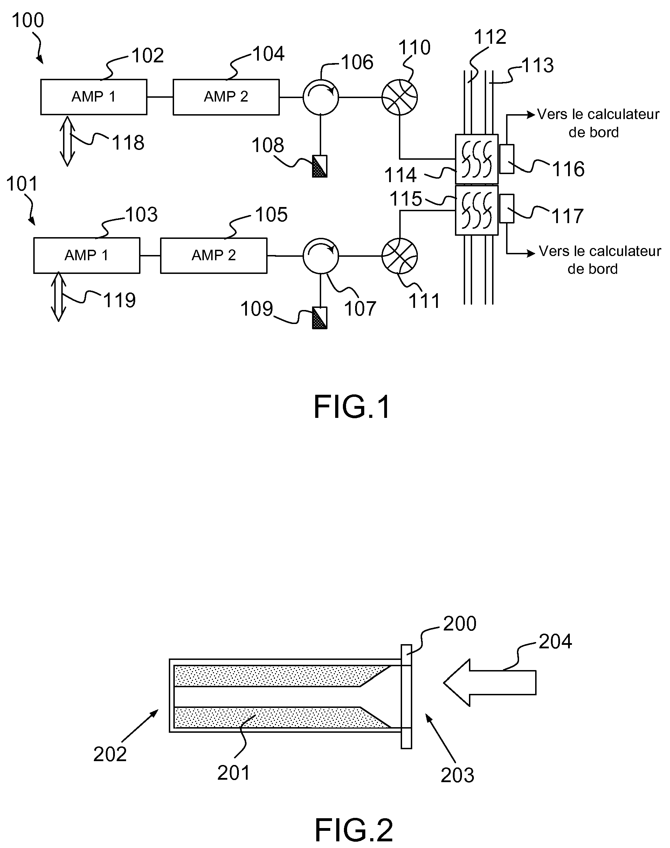

La figure 1 donne un exemple de circuit radiofréquence embarqué comprenant un système de détection thermique. Cet exemple permet de transmettre des signaux sur deux canaux. Pour cela, deux chaînes de gains 100, 101 sont utilisées. La première chaîne de gains 100 comprend, par exemple, un premier amplificateur 102 contrôlable en gain, appelé amplificateur de canal. Cette amplificateur reçoit un signal à transmettre sur le canal lui étant associé ainsi que des commandes de contrôles en provenance d'un calculateur de bord, lui aussi embarqué dans le satellite. Le signal amplifié par le premier amplificateur 102 est à nouveau amplifié par un second amplificateur 104, celui-ci étant un amplificateur de puissance, par exemple de type à tube à onde progressive. Cet amplificateur 104 est désigné dans la suite de la description par l'acronyme TWTA venant de l'expression anglo-saxonne « Traveling Wave Tube Amplifier ». Le signal ainsi amplifié est transmis au travers d'un circulateur 106, puis d'un commutateur 110 réalisant l'aiguillage entre des chaînes de gains vers l'un des filtres passe-bande 114 d'un multiplexeur OMUX. Un système de refroidissement composé de caloducs 112, 113 (« heat pipes » en anglais) contribuant à évacuer la chaleur dans l'espace par rayonnement. En tenant compte des contraintes d'encombrement sur un satellite, ils ne peuvent pas être dimensionnés pour dissiper toute la puissance en cas de fonctionnement anormal. De manière à renforcer le contrôle thermique, un thermistor 116 est placé au voisinage du filtre 114 de manière à ce que celui-ci génère un signal représentatif de la température dudit filtre. Ce signal est ensuite transmis vers un calculateur de bord embarqué dans le satellite. En fonction de signal, le calculateur détermine un commande permettant de réduire le gain de l'amplificateur de canal 102 de manière à diminuer la dissipation thermique et ainsi éviter la détériorations des composants du système.

La seconde chaîne de gains 101 est associée au second canal de transmission. Des éléments du même types que ceux représentés sur la première chaîne 100 sont utilisés, c'est-à-dire un amplificateur de canal dont le gain est contrôlable numériquement 103, un amplificateur TWTA 105, un circulateur 107, un commutateur 111, un des filtres passe-bande 115 du multiplexeur OMUX et un thermistor de mesure 117 générant un signal dirigé vers le calculateur de bord.

La puissance réfléchie au niveau des filtres du multiplexer OMUX est dirigée par les circulateurs 106, 107 des différents canaux vers une charge de puissance 108, 109 associée à chaque voie, ladite puissance étant alors dissipée sous forme de chaleur.

Comme indiqué précédemment, ce type de technique a pour inconvénient son temps de réaction, car les thermistors 116, 117 présentent des caractéristiques d'inertie thermique induisant un retard significatif dans la détection des variations de température mesurée. Ce manque de réactivité du système par rapport aux variations de température peut se traduire par un endommagement irréversible des équipements embarqués de télécommunications.

La figure 2 donne un exemple de charge de puissance pour isolateur haute puissance. Ces charges de puissance sont habituellement composés d'une pièce de guide d'onde 200, par exemple en aluminium de forme rectangulaire ou autre. Ce guide d'onde comprend un matériau absorbant 201, par exemple carbure de silicium SiC RS - 4200 CHP et est ouvert à une de ses extrémités 203 et fermé à l'autre 202 de manière à former un court circuit. Il fonctionne alors comme une charge de puissance.

Ainsi, lorsqu'un tel isolateur est utilisé pour dissiper la puissance réfléchie au niveau du multiplexeur OMUX, le signal réfléchi 204 est dirigé par un circulateur vers la charge de puissance telle que décrit précédemment, pénètre dans le guide d'onde et y est dissipée

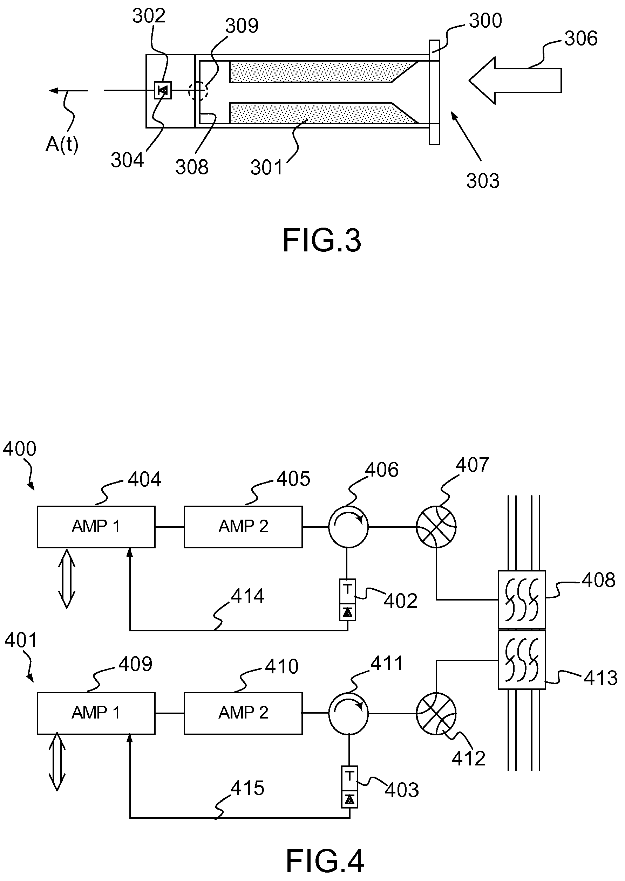

La figure 3 présente une charge de puissance améliorée comprenant un détecteur radiofréquence. Cette charge de puissance est composé d'une pièce de guide d'onde 300, par exemple en aluminium et de forme rectangulaire ou cylindrique. Ledit guide d'onde comprend une ouverture 303 par lequel le signal d'entrée à atténuer 306 pénètre. L'atténuation est réalisée grâce à l'utilisation d'un matériau absorbant 301. Dans cette réalisation, un détecteur radiofréquence 302 est excité par un signal passant à travers un élément de couplage 308 positionné à l'extrémité de la charge de puissance, c'est-à-dire dans au niveau de l'extrémité opposée à l'ouverture 303. Le guide d'onde est conçu comme un court circuit mais de manière à laisser passer un portion de puissance au niveau de son extrémité 308 en contact avec le détecteur 302, par exemple par couplage. Le détecteur radiofréquence est par exemple un détecteur à diodes. Cette portion de puissance est convertie en un signal d'alarme A(t) par le détecteur 302. Ce signal d'alarme correspond à une tension ou une intensité fonction de la puissance incidente à l'entrée du détecteur 302. Ce signal d'alarme peut alors être utilisé de manière à contrôler les composants radiofréquence de la chaîne de gains à laquelle est associé le dispositif d'isolation et d'alarme afin de réduire la température des composants en cas d'anomalie.

Le figure 4 donne un exemple de circuit radiofréquence embarqué comprenant un système de contrôle thermique par signal d'alarme.

L'exemple de la figure comprend deux chaînes de gains 400, 401. Pour chaque canal, les mêmes éléments que ceux décrits sur les canaux de la figure 1 son représentés, c'est-à-dire et pour chaque canal, un amplificateur de canal contrôlable en gain 404, 409, un amplificateur de puissance 405, 410, un circulateur 406, 411, un commutateur 407, 412, et un multiplexer OMUX composé de plusieurs filtres passe-bande 408, 413.

Les circulateurs dirigent les signaux réfléchis vers des charges haute puissance comprenant un détecteur radiofréquence 402, 403. Ces isolateurs génèrent un signal d'alarme dirigé par une ligne conductrice 414, 415 vers l'amplificateur de canal 404, 409. Un module de contrôle de l'amplificateur permet alors d'ajuster le gain dudit amplificateur en fonction de la tension / de l'intensité dudit signal. Le module de contrôle est par exemple intégré à l'amplificateur de canal. Dans une réalisation alternative, celui-ci peur être mis en oeuvre à l'extérieur de l'amplificateur.

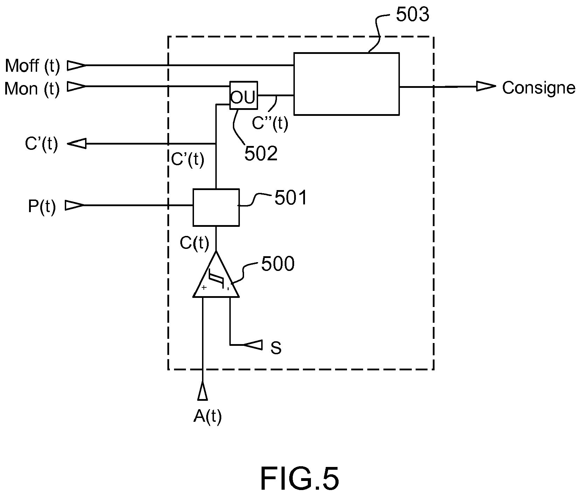

La figure 5 donne un exemple de module de contrôle d'un amplificateur de canal. Le signal d'alarme A(t) généré par le détecteur radiofréquence de la charge de puissance décrite précédemment est dirigé vers ce module de contrôle. Celui-ci est introduit dans un comparateur à seuil 500 pour être comparé à un signal seuil S. La valeur du signal seuil S est une constante mémorisée mais peut être modifiée pour programmation du module de contrôle. Le signal de sortie du comparateur 500 est un signal binaire C(t) correspondant à un '0' ou à un '1'. La comparaison est telle que, par exemple :

$$A(t) < S \Rightarrow C(t) = 0$$

$$A(t) \geq S \Rightarrow C(t) = 1$$

Un circuit interrupteur 501 permet d'activer ou de désactiver la prise en compte du signal C(t), ce qui est équivalent à activer ou désactiver la protection contre les élévations thermiques. Par exemple, un signal binaire P(t) permet de contrôler cette activation tel que si P(t)=0, le signal de sortie de circuit C'(t) est forcé à 0, et si P(t) = 1, C'(t) = C(t).

Le signal C'(t) est disponible en sortie de module de contrôle et permet de donner d'indiquer quel est l'état du contrôle à l'ordinateur de bord.

Le signal C'(t) est aussi utilisé comme entrée d'une porte OU logique 502, la seconde entrée correspondant à un signal binaire de commande Mon(t), le signal C'(t) étant pris en compte pour le contrôle de l'amplificateur lorsque, par exemple, Mon(t) = 1. En d'autre termes, le signal de sortie C''(t) de la porte OU 502 est tel que C''(t) = C'(t) quand Mon(t) = 1 et est forcé à 0 si Mon(t) = 0.

Un module de calcul de la consigne de contrôle 503 détermine une consigne de contrôle en fonction de la valeur du signal C'(t). Cette consigne peut être une commande permettant de désactiver l'amplificateur de canal associé au module de contrôle ou bien une commande d'ajustement du gain dudit amplificateur en tenant compte des variations du signal C'(t) sur un intervalle de temps donné. Le calcul de la consigne peut être activé ou désactivé à l'aide d'un signal Moff(t).

Dans la solution proposée, le temps de réaction permettant de tenir compte d'une élévation anormale de la température est particulièrement court. En effet, le temps de réaction du détecteur ainsi que le temps de calcul de la consigne par le module de contrôle sont de l'ordre de quelques millisecondes. Cette ordre de grandeur est à comparer avec celui associé aux systèmes de l'état de la technique, comme par exemple ceux à base de thermistors, dont le temps de réaction peut aller jusqu'à plusieurs dizaines de secondes.

Dans certaines réalisations, les multiplexeurs radiofréquence sont conçus de manière à résister aux augmentations de température dues aux signaux hors-bande. Avec la mise en oeuvre d'un système de contrôle thermique par signal d'alarme, les contraintes dues à ces dissipations sont moins importantes et il est alors possible de dimensionner les filtres du multiplexeur tels qu'une économie de l'ordre de 80 grammes puisse être réalisée par canal, ce qui est équivalent à plusieurs kilos pour l'ensemble du circuit radiofréquence embarqué.

**Revendications**

1. Circuit radiofréquence embarqué dans un satellite, des données étant transmises sur plusieurs canaux par des signaux radiofréquences, un canal correspondant à une bande de fréquence, une chaîne de gains (400, 401) pouvant être associée à un canal de manière à générer le signal radiofréquence à transmettre sur celui-ci, ladite chaîne comportant au moins un amplificateur à gain variable (404, 409), les signaux radiofréquences ainsi générés étant multiplexés par un multiplexeur composé de filtres passe-bande (408, 413), ledit circuit étant **caractérisé en ce que** les chaînes de gains comportent une charge de puissance (402, 403) agencée de manière à dissiper la puissance de signaux réfléchie par les filtres du multiplexeur, ladite charge comportant des moyens pour générer un signal d'alarme A(t) représentatif du niveau de puissance des signaux réfléchis, ce signal d'alarme étant utilisé pour contrôler le gain de l'amplificateur à gain variable (404, 409).

2. Circuit selon la revendication 1 **caractérisé en ce que** des modules de contrôle associés aux chaînes de gains comprennent des moyens (503) pour déterminer des consignes de contrôle de l'amplificateur à gain variable desdites chaînes, lesdites consignes étant déduites de la comparaison (500) entre une quantité représentative du signal d'alarme A(t) et une valeur seuil S prédéfinie.

3. Circuit selon la revendication 2 **caractérisé en ce que** la quantité représentative du signal d'alarme est son intensité ou sa tension.

4. Circuit selon l'une quelconque des revendications 2 ou 3 **caractérisé en ce que** la consigne générée par un module de contrôle est telle que l'amplificateur à gain variable d'au moins une chaîne de gains est désactivé lorsque la valeur représentative du signal d'alarme est supérieure ou égale à la valeur seuil S.

5. Charge de puissance composée d'une pièce de guide d'onde creuse (300) conçue comme un court circuit, comprenant une ouverture (303) par laquelle un signal d'entrée à atténuer (306) est introduit, ledit signal étant atténué par un matériau absorbant (301) compris dans la pièce de guide d'onde (300), la charge de puissance étant **caractérisée en ce qu'**elle comprend un détecteur radiofréquence (302), ledit détecteur étant positionné à l'extrémité (308) opposée à l'ouverture (303) de la pièce de guide d'onde, ladite pièce étant agencée de manière à ce qu'elle laisse passer une portion de puissance du signal d'entrée (306) au niveau de son extrémité (308) la plus proche du détecteur (302), le détecteur radiofréquence convertissant cette portion de puissance en un signal d'alarme A(t) étant apte à contrôler le gain d'un amplificateur à gain variable.

6. Charge de puissance selon la revendication 5 **caractérisée en ce que** le détecteur radiofréquence est un détecteur à diodes ou à transistors (304).

7. Charge de puissance selon l'une quelconque des revendications 5 ou 6 **caractérisée en ce que** la portion de puissance du signal entrant est transmise vers le détecteur radiofréquence par couplage (309).

8. Charge de puissance selon l'une quelconque des revendications 5 à 7 **caractérisée en ce que** le signal d'alarme correspond à une tension ou une intensité fonction de la puissance incidente de la portion de puissance présente en entrée du détecteur.

**Patentansprüche**

1. Funkfrequenzschaltung an Bord eines Satelliten, wobei Daten über mehrere Kanäle per Funkfrequenzsignal übertragen werden, wobei ein Kanal einem Frequenzband entspricht, wobei eine Folge von Verstärkungen (400, 401) mit einem Kanal assoziiert werden kann, um das darauf zu übertragende Funkfrequenzsignal zu erzeugen, wobei die Folge wenigstens einen Verstärker mit variabler Verstärkung (404, 409) umfasst, wobei die so erzeugten Funkfrequenzsignale von einem Multiplexer bestehend aus Bandpassfiltern (408, 413) multiplexiert werden, wobei die Schaltung **dadurch gekennzeichnet ist, dass** die Folgen von Verstärkungen eine Leistungslast (402, 403) haben, die so ausgelegt ist, dass sie die Leistung von von den Filtern des Multiplexers reflektierten Signalen ableiten, wobei die Last Mittel zum Erzeugen eines Alarmsignals A(t) umfasst, das den Leistungspegel von reflektierten Signalen repräsentiert, wobei das Alarmsignal zum Regeln der Verstärkung des Verstärkers mit variabler Verstärkung (404, 409) benutzt wird.

2. Schaltung nach Anspruch 1, **dadurch gekennzeichnet, dass** mit den Folgen von Verstärkungen assoziierte Steuermodule Mittel (503) zum Ermitteln von Steuersollwerten für den Verstärker mit variabler Verstärkung der Folgen umfassen, wobei die Sollwerte von einem Vergleich (500) zwischen einer das Alarmsignal A(t) repräsentierenden Größe und einem vordefinierten Schwellenwert S abgeleitet werden.

3. Schaltung nach Anspruch 2, **dadurch gekennzeichnet, dass** die das Alarmsignal repräsentierende Größe seine Intensität oder seine Spannung ist.

4. Schaltung nach Anspruch 2 oder 3, **dadurch gekennzeichnet, dass** der von einem Steuermodul erzeugte Sollwert derart ist, dass der Verstärker mit variabler Verstärkung von wenigstens einer Folge von Verstärkungen deaktiviert wird, wenn der das Alarmsignal repräsentierende Wert gleich oder größer als der Schwellenwert S ist.

5. Leistungslast bestehend aus einem Hohlwellenleiterteil (300), ausgelegt als Kurzschluss, umfassend eine Öffnung (303), durch die ein zu dämpfendes Eingangssignal (306) eingeleitet wird, wobei das Signal durch ein in dem Wellenleiterteil (300) enthaltenes absorptionsfähiges Material (301) gedämpft wird, wobei die Leistungslast **dadurch gekennzeichnet ist, dass** sie einen Funkfrequenzdetektor (302) umfasst, wobei der Detektor an dem Ende (308) gegenüber der Öffnung (303) des Wellenleiterteils positioniert ist, wobei der Teil so ausgelegt ist, dass er es zulässt, dass eine Menge der Leistung des Eingangssignals (306) an dem Ende (308) durchgelassen wird, das dem Detektor (302) am nächsten liegt, wobei der Funkfrequenzdetektor diese Leistungsmenge in ein Alarmsignal A(t) umwandelt, das den Gewinn eines Verstärkers mit variablem Gewinn regeln kann.

6. Leistungslast nach Anspruch 5, **dadurch gekennzeichnet, dass** der Funkfrequenzdetektor ein Dioden- oder Transistor-Detektor (304) ist.

7. Leistungslast nach Anspruch 5 oder 6, **dadurch gekennzeichnet, dass** die Leistungsmenge des eingehenden Signals zum Funkfrequenzdetektor durch Kopplung (309) übertragen wird.

8. Leistungslast nach einem der Ansprüche 5 bis 7, **dadurch gekennzeichnet, dass** das Alaimsignal einer Spannung oder einer Intensität entspricht, die von der Einfallsleistung der am Eingang des Detektors anliegenden Leistungsmenge abhängig ist.

## Claims

1. A radiofrequency circuit on board a satellite, data being transmitted over a plurality of channels via radiofrequency signals, a channel corresponding to a frequency band, a sequence of gains (400, 401) being able to be associated with a channel so as to generate the radiofrequency signal to be transmitted thereon, said sequence comprising at least one variable gain amplifier (404, 409), the radiofrequency signals thus generated being multiplexed by a multiplexer made up of bandpass filters (408, 413), said circuit being **characterised in that** said sequences of gains comprise a power load (402, 403) arranged so as to dissipate the power of signals reflected by the filters of said multiplexer, said load comprising means for generating an alarm signal A(t) representing the power level of the reflected signals, said alarm signal being used to control the gain of said variable gain amplifier (404, 409).

2. The circuit according to claim 1, **characterised in that** control modules associated with said sequences of gains comprise means (503) for determining control setpoints for the variable gain amplifier of said sequences, said setpoints being deduced from a comparison (500) between a quantity that represents said alarm signal A(t) and a predefined threshold value S.

3. The circuit according to claim 2, **characterised in that** the quantity that represents said alarm signal is its intensity or its voltage.

4. The circuit according to any one of claims 2 to 3, **characterised in that** the setpoint generated by a control module is such that the variable gain amplifier of at least one sequence of gains is deactivated when the value that represents said alarm signal is greater than or equal to said threshold value S.

5. A power load made up of a hollow waveguide part (300) designed as a short circuit, comprising an opening (303), through which an input signal (306) to be attenuated is introduced, said signal being attenuated by an absorbent material (301) included in said waveguide part (300), said power load being **characterised in that** it comprises a radiofrequency detector (302), said detector being positioned at the end (308) opposite said opening (303) of said waveguide part, said part being arranged so that it allows an amount of the power of said input signal (306) through at its end (308) that is closest to said detector (302), said radiofrequency detector converting this amount of power into an alarm signal A(t) that is capable of controlling the gain of a variable gain amplifier.

6. The power load according to claim 5, **characterised in that** said radiofrequency detector is a diode or transistor detector (304).

7. The power load according to any one of claims 5 to 6, **characterised in that** the amount of power of the incoming signal is transmitted to said radiofrequency detector by coupling (309).

8. The power load according to any one of claims 5 to 7, **characterised in that** said alarm signal corresponds to a voltage or an intensity that is a function of the incident power of the amount of power present at the input of said detector.

100

102          104          106          110          112          113

AMP 1        AMP 2                              Vers le calculateur
                                                de bord

118                                             114              116
                        108
101
                                                115              117
103          105          107          111
AMP 1        AMP 2                              Vers le calculateur
                                                de bord
119
        109      107      111

# FIG.1

200          204

201
202          203

# FIG.2

FIG.3

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1732231 A2
- US 6753807 B1
- US 2003114182 A1
- US 2648047 A